(19) Europäisches Patentamt
European Patent Office
Office européen des brevets

(11) EP 4 611 153 A1

(12) **EUROPEAN PATENT APPLICATION**
published in accordance with Art. 153(4) EPC

(43) Date of publication:
**03.09.2025 Bulletin 2025/36**

(21) Application number: **23883115.0**

(22) Date of filing: **26.10.2023**

(51) International Patent Classification (IPC):
***H01M 50/42*** $^{(2021.01)}$ ***H01M 50/446*** $^{(2021.01)}$
***H01M 50/403*** $^{(2021.01)}$ ***C08L 33/14*** $^{(2006.01)}$
***C08L 33/02*** $^{(2006.01)}$ ***C08L 29/04*** $^{(2006.01)}$
***C08L 33/20*** $^{(2006.01)}$ ***C08L 33/26*** $^{(2006.01)}$
***C08L 101/06*** $^{(2006.01)}$ ***C08L 101/08*** $^{(2006.01)}$

(52) Cooperative Patent Classification (CPC):
**C08F 2/04; C08L 29/04; C08L 33/02; C08L 33/14; C08L 33/20; C08L 33/26; C08L 101/06; C08L 101/08; H01M 50/403; H01M 50/42; H01M 50/446;** Y02E 60/10

(86) International application number:
**PCT/KR2023/016715**

(87) International publication number:
**WO 2024/091010 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.10.2022 KR 20220139396**

(71) Applicant: **Hansol Chemical Co., Ltd**
**Seoul 06169 (KR)**

(72) Inventors:
- **CHO, Seung-Wan**
  **Wanju-gun, Jeollabuk-do 55321 (KR)**
- **LEE, Go-Eun**
  **Wanju-gun, Jeollabuk-do 55321 (KR)**
- **KIM, Young-Su**
  **Wanju-gun, Jeollabuk-do 55321 (KR)**
- **KIM, Jin-Yeong**
  **Wanju-gun, Jeollabuk-do 55321 (KR)**
- **JANG, Bo-Ok**
  **Wanju-gun, Jeollabuk-do 55321 (KR)**
- **LEE, Nam-Joo**
  **Wanju-gun, Jeollabuk-do 55321 (KR)**
- **NOH, Myeong-Jun**
  **Wanju-gun, Jeollabuk-do 55321 (KR)**
- **OH, Sae-Wook**
  **Wanju-gun, Jeollabuk-do 55321 (KR)**
- **KWON, Se-Man**
  **Wanju-gun, Jeollabuk-do 55321 (KR)**

(74) Representative: **Cabinet Chaillot**
**16/20, avenue de l'Agent Sarre**
**B.P. 74**
**92703 Colombes Cedex (FR)**

# (54) POLYMER COMPOSITION FOR SEPARATOR, AND SECONDARY BATTERY COMPRISING SAME

(57) The present invention relates to a polymer composition, and a slurry composition, a separator and a secondary battery comprising same, the polymer composition comprising: a particle-type polymer comprising a carboxyl group or an alcohol group; and a chain-type polymer comprising a carboxyl group or an alcohol group (if the particle-type polymer comprises the carboxyl group, the chain-type polymer comprises the alcohol group and, if the particle-type polymer comprises the alcohol group, the chain-type polymer comprises the carboxyl group).



Processed by Luminess, 75001 PARIS (FR)

## Description

### Technical Field

The present disclosure relates to a polymer composition, and a slurry composition, a separator, and a secondary battery including same.

### Background Art

With high energy density, lithium secondary batteries are being used extensively in electrical, electronic, telecommunication, and computer fields. Furthermore, application fields of lithium secondary batteries are being expanded to high-capacity secondary batteries for hybrid vehicles, electric vehicles, and the like, in addition to small lithium secondary batteries for portable electronic devices.

Although the insulation of lithium-ion secondary batteries is achieved by separators, internal or external battery abnormalities or impacts cause short circuits between positive and negative electrodes, which may lead to heat generation and explosion. Thus, ensuring the thermal and chemical safety of separators is pivotal.

Currently, polyolefin-based films are being used widely as separators, but polyolefins have the disadvantages of severe thermal shrinkage at high temperatures and poor mechanical properties.

To improve the stability of such polyolefin-based separators, a porous separator in which a polyolefin porous substrate film is coated with a mixture composed of inorganic particles and a binder has been developed.

In other words, to suppress battery instability caused by dendrites and thermal shrinkage of polyolefin-based separators caused by high temperatures, one or both sides of the porous separator substrate are coated with the inorganic particles in conjunction with the binder. Accordingly, the inorganic particles can impart the function of suppressing the shrinkage rate of the substrate while manufacturing a further safe separator by the coating layer.

To obtain excellent battery characteristics, the coating layer is required not only to be evenly coated but also to have strong adhesion to the substrate.

In addition, to cope with the recent high capacity and high output of batteries, the heat resistance of existing separators needs to be further improved.

[Documents of related art]

[Patent Documents]

(Patent Document 1) Korean Patent No. 10-1430975
(Patent Document 2) Korean Patent Application Publication No. 10-2006-0072065

## Disclosure

### Technical Problem

Accordingly, the present disclosure aims to provide a slurry composition with excellent properties using a polymer composition.

In addition, the present disclosure aims to provide a separator to which the slurry composition is applied, thus having excellent heat resistance, and a battery with excellent performance using the separator.

However, the problems to be solved by the present application are not limited to the aforementioned description, and other problems not mentioned can be clearly understood by those skilled in the art from the following description.

### Technical Solution

In one aspect of the present application, a polymer composition including: a particulate polymer containing a carboxyl group or an alcohol group; and

a chain polymer containing a carboxyl group or an alcohol group
is provided.
(However, when the particulate polymer contains a carboxyl group, the chain polymer contains an alcohol group, and when the particulate polymer contains an alcohol group, the chain polymer contains a carboxyl group)

In another aspect of the present application, a slurry composition including: the polymer composition; and inorganic particles
is provided.
In a further aspect of the present application, a separator including the slurry composition
is provided.
In yet another aspect of the present application, a secondary battery including the separator
is provided.
In yet another aspect of the present application, a method of manufacturing a separator, the method including the following steps: coating a porous substrate with a slurry composition including the polymer composition and inorganic particles, followed by drying; and
cross-linking the resulting dried product at a temperature of 50°C or higher,
is provided.

**Advantageous Effects**

A polymer composition of the present disclosure can improve the heat resistance of a separator. In addition, a battery with excellent characteristics can be implemented.

**Best Mode**

Hereinafter, the action and effect of the present disclosure will be described in more detail through specific embodiments of the present disclosure. However, these embodiments are provided only for illustrative purposes of the present disclosure, and the scope of the present disclosure is not limited thereby.

Prior to discussing the details, it should be noted that all terms or words used herein and used in the appended claims are not construed as being limited to general and dictionary meanings but will be interpreted based on the meanings and concepts corresponding to the technical ideas of the present disclosure, following the principle that any inventor is allowed to define the concepts of terms as appropriate to describe the disclosure thereof in the best mode.

Therefore, the embodiments described herein are configured merely as one of the most preferable examples of the present disclosure and do not exhaustively represent the technical idea of the present disclosure. Accordingly, it should be appreciated that there may be various equivalents and modifications that can replace these embodiments as of the filing date of the present application.

As used herein, the singular forms are intended to include the plural forms, unless the context clearly indicates otherwise. It will be further understood that the terms "comprise," "include," "have," and the like when used herein, are intended to specify the presence of stated features, integers, steps, constituent elements, or combinations thereof but do not preclude the possibility of the presence or addition of one or more other features, integers, steps, constituent elements, or combinations thereof.

As used herein, the expression "a to b" to represent a numerical range is defined as ≥ a and ≤ b.

A polymer composition of one aspect of the present application may include: a particulate polymer containing a carboxyl group or an alcohol group; and a chain polymer containing a carboxyl group or an alcohol group.

However, when the particulate polymer contains a carboxyl group, the chain polymer may contain an alcohol group, and when the particulate polymer contains an alcohol group, the chain polymer may contain a carboxyl group.

The particulate polymer may be particles in various forms, especially spherical particles, and may have an average diameter in the range of 100 nm to 2 μm.

The chain polymer is dissolved in a solvent, so the physical form of the chain polymer may not be visually observed. In other words, the chain polymer may be in a solvent-dissolved liquid form.

In the meantime, the particulate polymer may be dispersed in a solvent, the chain polymer may be dissolved in the solvent, and the particulate polymer and the chain polymer may be mixed with each other.

As the solvent, any of those capable of dispersing the particulate polymer while dispersing or dissolving the chain polymer may be used. For example, water may be used as the solvent.

In one embodiment, the particulate polymer and the chain polymer may include one or more monomer units selected from the group consisting of an acrylate-based monomer unit and an acrylic acid-based monomer unit.

Such an acrylate-based monomer unit may be formed, for example, by polymerization of one or more selected from the group consisting of methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, sec-butyl acrylate, sec-butyl methacrylate, tert-butyl acrylate, tert-butyl methacrylate, hexyl acrylate, 2-ethylhexyl acrylate, lauryl acrylate, lauryl methacrylate, stearyl acrylate, and stearyl methacrylate.

In other words, the acrylate-based monomer unit may be formed by copolymerization of two or more or three or more acrylate-based monomers.

For example, the acrylate-based monomer unit may be formed by copolymerization of two or more selected from the group consisting of butyl acrylate, methyl methacrylate, and butyl methacrylate.

Such an acrylic acid-based monomer unit may be formed by polymerization of one or more selected from the group consisting of acrylic acid and methacrylic acid

In one embodiment, the particulate polymer may further include a hydroxy acrylate-based monomer unit.

For example, the particulate polymer may be a copolymer including the acrylate-based monomer unit and the acrylic acid-based monomer unit, or a copolymer including the acrylate-based monomer unit and the hydroxy acrylate-based monomer unit.

When the particulate polymer is the copolymer including the acrylate-based monomer unit and the acrylic acid-based monomer unit, this copolymer, based on 100 wt% of the total weight thereof, may include 70 wt% or more and 95 wt% or less of the acrylate-based monomer unit and 5 wt% or more and 30 wt% or less of the acrylic acid-based monomer unit.

In the meantime, when the particulate polymer is the copolymer including the acrylate-based monomer and the hydroxy acrylate-based monomer unit, this copolymer, based on 100 wt% of the total weight thereof, may include 70 wt% or more and 95 wt% or less of the acrylate-based monomer unit and 5 wt% or more and 30 wt% or less of the hydroxy acrylate-based monomer unit.

In addition, the chain polymer may further include a vinyl alcohol-based monomer unit.

For example, the chain polymer may be a polymer made of an acrylic acid monomer unit alone, a copolymer including the acrylate-based monomer and the vinyl alcohol-based monomer unit, or a copolymer including the acrylate-based monomer unit and the acrylic acid-based monomer unit.

When the chain polymer is the copolymer including the acrylate-based monomer unit and the vinyl alcohol-based monomer unit, this copolymer, based on 100 wt% of the total weight thereof, may include 40 wt% or less of the acrylate-based monomer unit and 60 wt% or more of the vinyl alcohol-based monomer unit.

In the meantime, when the chain polymer includes the acrylate-based monomer and the acrylic acid-based monomer unit, the chain polymer, based on 100 wt% of the total weight thereof, may include 30 wt% or less of the acrylate-based monomer unit and 70 wt% or more of the acrylic acid-based monomer unit.

In the meantime, the hydroxy acrylate-based monomer unit of the particulate polymer may be formed by polymerization of one or more selected from the group consisting of 2-hydroxyethyl acrylate and 2-hydroxyethyl methacrylate.

In one embodiment, the particulate polymer, based on 100 wt% of the total weight thereof, may further include 5 wt% or more and 10 wt% or less of an acrylonitrile monomer unit, an acrylamide monomer unit, or a combination thereof.

The acrylonitrile monomer unit may be formed by polymerization of one or more selected from the group consisting of acrylonitrile and methacrylonitrile, and the acrylamide monomer unit may be formed by polymerization of one or more selected from the group consisting of acrylamide and methacrylamide.

In one embodiment, the particulate polymer may include a monomer repeating unit represented by Formula 1 or 2 below.

[Formula 1]

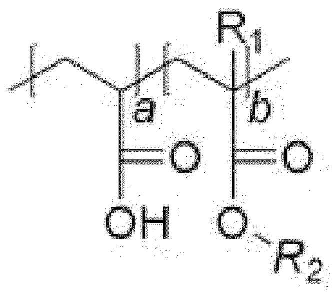

In Formula 1,

$R_1$ is hydrogen, methyl, or a combination thereof,

$R_2$ is hydrogen, a straight-chain or branched-chain hydrocarbon having 1 to 20 carbon atoms, or a combination thereof,

$$0.05 \leq a \leq 0.3,\ 0.7 \leq b \leq 0.95, \text{ and } a + b = 1.$$

[Formula 2]

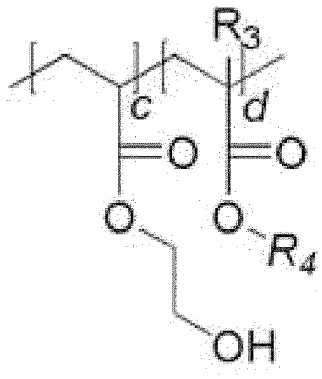

In Formula 2,

$R_3$ is hydrogen, methyl, or a combination thereof,
$R_4$ is hydrogen, a straight-chain or branched-chain hydrocarbon having 1 to 20 carbon atoms, or a combination thereof,

$$0.05 \leq c \leq 0.3,\ 0.7 \leq d \leq 0.095, \text{ and } c + d = 1.$$

In Formulas 1 and 2, a, b, c, and d may represent the weight fractions of the respective repeating units.
In one embodiment, the chain polymer may include a monomer repeating unit represented by Formula 3 or 4 below.

[Formula 3]

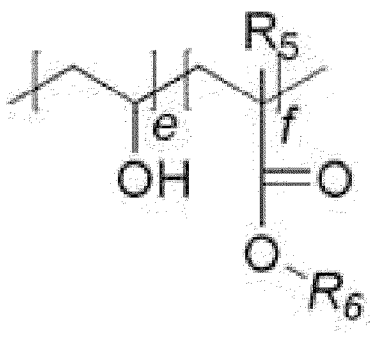

In Formula 3,

$R_5$ is hydrogen, methyl, or a combination thereof,
$R_6$ is hydrogen, a straight-chain or branched-chain hydrocarbon having 1 to 20 carbon atoms, or a combination thereof,

$$0.6 \leq e \leq 1,\ 0 \leq f \leq 0.4, \text{ and } e + f = 1.$$

[Formula 4]

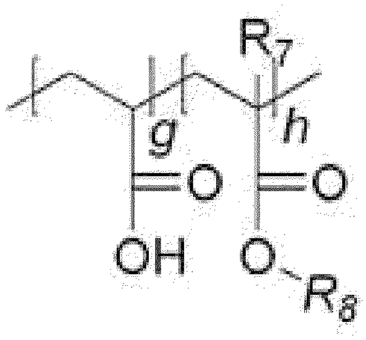

In Formula 4,

$R_7$ is hydrogen, methyl, or a combination thereof,
$R_8$ is hydrogen, a straight-chain or branched-chain hydrocarbon having 1 to 20 carbon atoms, or a combination thereof,

$$0.7 \leq g \leq 1,\ 0 \leq h \leq 0.3, \text{ and } g + h = 1.$$

In Formulas 3 and 4, e, f, g, and h may represent the weight fractions of the respective repeating units.

In one embodiment, a weight ratio of the particulate polymer to the chain polymer (particulate polymer weight:chain polymer weight) may be in the range of 1:9 to 9: 1.

For example, the weight ratio of the particulate polymer to the chain polymer (particulate polymer weight:chain polymer weight) may be in the range of 7:3 to 3:7, in the range of 4:6 to 6:4, or 5:5.

In one embodiment, the particulate polymer and the chain polymer may be linked to each other by an ester bond.

In addition, the particulate polymer and the chain polymer may be linked to each other by a hydrogen bond.

The linkage (bonding) between the particulate polymer and the chain polymer by the ester bond and/or the hydrogen bond may be formed by the reaction between the carboxyl group and the alcohol group contained in the particulate polymer and the chain polymer.

Through such bonding of the particulate polymer and the chain polymer, the heat resistance of a separator to which the polymer composition of the present application is applied may be improved.

In one embodiment, the particulate polymer may be synthesized by emulsion polymerization. The chain polymer may be synthesized by hydrolysis of a prepolymer synthesized by emulsion polymerization or may be synthesized by solution polymerization.

In other words, a vinyl acetate monomer unit may become the vinyl alcohol-based monomer unit through hydrolysis.

The degree of hydrolysis may be 70% or higher.

For example, the degree of hydrolysis may be 70% or higher, 80% or higher, or 90% or higher.

In order for the hydrolysis reaction to occur, a metal hydroxide aqueous solution may be used. For example, NaOH, KOH, LiOH, or the like may be used.

In one embodiment, the particulate polymer may have a number average molecular weight in the range of 5,000 to 10,000,000, and the chain polymer may have a number average molecular weight in the range of 5,000 to 10,000,000.

When the number average molecular weight of the particulate polymer and the number average molecular weight of the chain polymer are smaller than 5,000, the fluidity of the composition may increase, leading to deterioration in the dispersibility and deterioration in the heat-resistant properties of the separator. When the number average molecular weight of the particulate polymer and the number average molecular weight of the chain polymer are greater than 10,000,000, the viscosity may be excessively high for use, and the pores of the separator may be blocked, so the air permeability and resistance may become poor.

A slurry composition, according to another aspect of the present application, may include the polymer composition and inorganic particles.

As the inorganic particles, any insulator particles are usable without limitations. Preferably, the inorganic particles may be high dielectric constant insulator particles.

Specific examples of the inorganic particles may include $Al_2O_3$, AlOOH, $SiO_2$, $TiO_2$, $ZrO_2$, ZnO, NiO, CaO, $SnO_2$, $Y_2O_3$, MgO, $BaTiO_3$, $CaTiO_3$, $SrTiO_3$, SiC, $Li_3PO_4$, $Pb(Zr,Ti)O_3$(PZT), $(Pb,La)(Zr,Ti)O_3$(PLZT), or a mixture thereof.

The inorganic particles are not particularly limited in size but may, for example, have a median particle diameter in the range of 0.01 μm to 30 μm, which is more preferably in the range of 0.1 μm to 10 μm. When the median particle diameter of the inorganic particles is smaller than the above preferable range, the dispersibility may become poor. When the median particle diameter of the inorganic particles exceeds the above preferable range, the thickness of a coating layer may be increased after coating, leading to deterioration in the mechanical properties.

In addition, the inorganic particles are not particularly limited in form but may, for example, have a spherical, elliptical, platy, or irregular form.

A separator, according to a further aspect of the present application, may include the slurry composition.

Once the slurry composition is applied to the separator, the thermal shrinkage rates measured immediately after undergoing a cross-linking step (thermal treatment) may be in the range of 1% to 2% in both the machine direction (MD) and transverse direction (TD).

In addition, after undergoing the cross-linking step, the separator is left unattended at a temperature of 150°C for 1 hour. The thermal shrinkage rates measured at this time may be 5% or lower in both the MD and TD.

The separator may be manufactured by coating at least one side of a porous substrate film with the slurry composition or by forming the slurry composition into a film form and laminating such a formed film to the porous substrate film.

In the meantime, the separator may be used as a separator for a secondary battery and, for example, used as a separator for a lithium secondary battery.

A method of manufacturing a separator, according to yet another aspect of the present application, may include the following steps: coating a porous substrate with a slurry composition including the polymer composition of the present application and inorganic particles, followed by drying; and cross-linking the resulting dried product at a temperature of 50°C or higher.

The temperature of the coating and drying step may be 40°C or higher and 80°C or lower.

For example, the temperature of the coating and drying step may be 40°C or higher, 50°C or higher, 60°C or higher, or 70°C or higher.

In addition, the reaction time of the coating and drying step may be 1 minute or more and 30 minutes or less.

For example, the reaction time of the coating and drying step may be 5 minutes or less, 10 minutes or less, 15 minutes or less, 20 minutes or less, or 25 minutes or less.

In the meantime, the temperature of the cross-linking step may be 50°C or higher and 100°C or lower. For example, the temperature of the cross-linking step may be 50°C or higher, 60°C or higher, 70°C or higher, or 80°C or higher.

In addition, the reaction time of the cross-linking step may be 30 minutes or more and 5 hours or less.

For example, the reaction time of the cross-linking step may be 1 hour or more, 2 hours or more, or 3 hours or more.

One example of manufacturing the separator may include: Step (a) of preparing a polymer solution by dissolving or dispersing the polymer composition in a solvent; Step (b) of adding the inorganic particles to the polymer solution obtained in Step a), followed by mixing; and Step (c) of coating one or more regions selected from the group consisting of the surface of a polyolefin-based separator substrate and some pores of the substrate with the resulting mixture obtained in Step b), followed by drying.

First, 1) the polymer solution having a form in which the polymer composition is dissolved or dispersed in an appropriate solvent is produced and prepared.

As the solvent, those having a low boiling point is preferable. This is to facilitate the removal of the solvent after uniform mixing. Non-limiting examples of usable solvents may include acetone, tetrahydrofuran, methylene chloride, chloroform, dimethylformamide, N-methyl-2-pyrrolidone (NMP), cyclohexane, water, or a mixture thereof. More preferably, the solvent is used in a water-dispersed state.

2) The inorganic particles are added to the prepared polymer solution and dispersed to prepare the mixture of the inorganic particles and the polymer.

Preferably, a process of dispersing the polymer solution and the inorganic particles is performed. While typical methods may be used as the dispersion method, a ball milling method is particularly preferable.

The mixture composed of the inorganic particles and the polymer is not particularly limited in composition. However, depending on the composition of the mixture, the thickness, pore size, and porosity of the finally manufactured organic/inorganic composite porous separator of the present disclosure may be controlled.

In other words, the higher the ratio (ratio = I/P) of the inorganic particles (I) with respect to the polymer (P), the higher the porosity of the separator, which results in an increase in the thickness of the separator at the same solid content (total weight of the inorganic particles and the polymer). In addition, pores are more likely to be formed between the inorganic particles, so the pore size becomes larger. In this case, the larger the inorganic particle size (particle diameter), the greater the interstitial distance between the inorganic materials, resulting in a larger pore size.

3) The upper portion of the prepared polyolefin-based separator substrate is coated with the prepared mixture of the inorganic particles and the polymer, followed by drying, so that the separator of the present disclosure can be obtained.

In this case, as a method of coating the upper portion of the polyolefin-based separator substrate with the mixture of the inorganic particles and the polymer, typical coating methods known in the art may be used. For example, various methods, such as dip coating, die coating, roll coating, comma coating, or combinations thereof, may be used. In addition, when coating the upper portion of the polyolefin-based separator substrate with the mixture of the inorganic particles and the polymer, the coating may be performed on both sides of the separator substrate or may be selectively performed on only one side.

When using the separator in a secondary battery, lithium ions may be transferred not only via the separator substrate but also via a porous active layer. In addition, in the case where an external impact causes internal short circuits, the safety improvement effect described above can be exhibited.

In addition, the secondary battery may include a positive electrode, a negative electrode, the separator interposed between the positive and negative electrodes, and an electrolyte solution.

The secondary battery may be manufactured by typical methods known in the art. As one example, the secondary battery is manufactured by interposing the separator between the electrodes to obtain an assembly and then injecting the electrolyte solution into the assembly.

The electrodes to be used in conjunction with the separator are not particularly limited. However, typical positive electrode active materials usable in positive electrodes of secondary batteries may be used as a positive electrode active material, and non-limiting examples thereof may include lithium intercalation materials, such as lithium manganese oxide (lithiated magnesium oxide), lithium cobalt oxide (lithiated cobalt oxide), lithium nickel oxide (lithiated nickel oxide), or a composite oxide formed by combinations thereof. In addition, typical negative electrode active materials usable in negative electrodes of existing electrochemical devices may be used as a negative electrode active material, and non-limiting examples thereof may include lithium metal or lithium alloys and lithium intercalation material, such as carbon, petroleum coke, activated carbon, graphite, or other carbon-based materials. Both the electrodes are configured in such forms that the positive and negative electrode active materials described above are bound to a positive electrode current collector, that is, a foil made of aluminum, nickel, or a combination thereof, and a negative electrode current collector, that is, a foil made of copper, gold, nickel, copper alloys, or combinations thereof, respectively.

The electrolyte preferably has a form in which a salt having a structure such as A+B-, including alkali metal cations, such as Li+, Na+, and K+, or ions composed of combinations thereof as A+ and anions, such as PF6-, BF4-, Cl-, Br-, I-, ClO4-, AsF6-, CH3CO2-, CF3SO3-, N(CF3SO2)2-, and C(CF2SO2)3-, or ions composed of combinations thereof as B-, is dissolved and dissociated in an organic solvent composed of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, NMP, ethyl methyl carbonate (EMC), gamma-butyrolactone (GBL), or a mixture thereof.

In addition to a typical winding process, a process in which the separator and the electrodes are laminated and folded is usable as a process of applying the separator to the battery.

## Mode for Invention

Hereinafter, the present application will be described in more detail using the following examples. However, the present application is not limited thereto.

[Preparation Example 1] Preparation of Particulate Polymers A1 and A2

Into a reaction vessel, 370 parts by weight of distilled water and 0.1 to 3.0 parts by weight of an emulsifier with respect to 100 parts by weight of a monomer mixture were introduced and stirred, followed by injecting high-purity nitrogen gas while raising the temperature to 75°C. In the reaction vessel prepared at a temperature of 75°C, the monomer mixture and 0.15 parts by weight of ammonium persulfate, serving as a degradable initiator, with respect to 100 parts by weight of the monomer mixture, were separately added to conduct continuous emulsion polymerization reactions.

In the meantime, Particulate Polymer A1 was prepared using a monomer mixture of a butyl acrylate monomer, a methacrylate monomer, butyl methacrylate, and an acrylic acid (AA) monomer at a weight ratio of 10:25:55:10, and Particulate Polymer A2 was prepared using a monomer mixture of a butyl acrylate monomer, a methacrylate monomer, butyl methacrylate, and a 2-hydroxyethyl acrylate (HEA) monomer at a weight ratio of 10:25:55:10.

[Preparation Example 2] Preparation of Chain Polymer B1

Into a reaction vessel, 250 parts by weight of distilled water and 0.1 to 3.0 parts by weight of an emulsifier with respect to 100 parts by weight of a monomer mixture were introduced and stirred, followed by injecting high-purity nitrogen gas while raising the temperature to 65°C. In the reaction vessel prepared at a temperature of 65°C, the monomer mixture and 0.35 parts by weight of potassium persulfate, serving as a degradable initiator, with respect to 100 parts by weight of

the monomer mixture, were separately added to conduct continuous emulsion polymerization reactions, thereby preparing a prepolymer.

In the meantime, a monomer mixture of vinyl acetate and methacrylate at a weight ratio of 65:35 was used.

The prepolymer, the copolymer prepared through the emulsion polymerization, was heated to a temperature of 60°C in alcohol, serving as a solvent, in an amount of 2 to 5 times the weight thereof for expansion or dissolution.

Then, a metal hydroxide (NaOH) aqueous solution was added to conduct hydrolysis, thereby preparing Polymer B1 having an alcohol functional group.

[Preparation Example 3] Preparation of Chain Polymer B2

Into a reaction vessel, high-purity nitrogen with respect to 250 parts by weight of distilled water and 100 parts by weight of an AA monomer was injected while raising the temperature to 65°C. In the reaction vessel prepared at a temperature of 65°C, 0.3 of ammonium persulfate, serving as a degradable initiator, was added to conduct continuous solution polymerization reactions.

[Preparation Example 4] Preparation of Binder Polymer Compositions C1 and C2

Separator Binder Polymer Composition C1 was prepared by mixing Particulate Polymer A1 and Chain Polymer B1, prepared by Preparation Examples 1 and 2, respectively.

In the meantime, Separator Binder Polymer Composition C2 was prepared by mixing Particulate Polymer A2 and Chain Polymer B2, prepared by Preparation Examples 1 and 3, respectively.

[Preparation Example 5] Preparation of Porous Film-Coating Slurry

Inorganic particles (alumina, having a median particle diameter of 0.5 μm) and Separator Binder Polymer Composition C1 or C2, prepared by Preparation Example 4, were mixed to achieve a solid content weight ratio of 8:2, followed by adding and mixing distilled water to adjust the solid content concentration to 35 wt%.

The resulting mixture was sufficiently dispersed by a ball milling method or using a mechanical stirrer, thereby preparing a slurry

[Preparation Example 6] Manufacture of Separator

The porous film-coating slurry, prepared by Preparation Example 5, was applied on a polyolefin porous substrate (polyethylene (PE), polypropylene (PP), and the like), thereby forming an inorganic coating layer.

As for the coating method, various methods, such as dip coating, die coating, gravure coating, comma coating, and the like, are applicable.

In addition, after the coating, the resulting coating layer was dried by methods involving warm air, hot air, vacuum drying, infrared drying, and the like. In this case, the drying temperature was in the range of 40°C to 80°C.

The inorganic coating layer had a thickness in the range of 1 to 6 μm on one or both sides. When the thickness was smaller than 1 μm, there was a problem in that the heat resistance of the separator was significantly reduced. When the thickness exceeded 6 μm, the separator had an excessively large thickness, so the energy density of a battery could decrease while the resistance increased.

[Example 1]

Binder Polymer composition C1 was prepared according to Preparation Example 4 by mixing Particulate Polymer A1 and Chain Polymer B1, prepared in Preparation Examples 1 and 2, respectively, such that the solid content weight ratio thereof was 4:6.

Then, a porous film-coating slurry was prepared according to Preparation Example 5, and a separator was prepared according to Preparation Example 6 by coating the porous film with the prepared porous film-coating slurry, followed by drying.

Next, a cross-linking step was performed at a temperature of 80°C for 1 hour.

[Example 2]

A separator was manufactured in the same manner as in Example 1, except that when manufacturing the separator, the reaction time of the cross-linking step was adjusted to 3 hours.

[Example 3]

A separator was manufactured in the same manner as in Example 1, except that the solid content weight ratio of Particulate Polymer A1 to Chain Polymer B1 was adjusted to 5:5.

[Example 4]

A separator was manufactured in the same manner as in Example 2, except that the solid content weight ratio of Particulate Polymer A1 to Chain Polymer B1 was adjusted to 5:5.

[Example 5]

Binder Polymer composition C2 was prepared according to Preparation Example 4 by mixing Particulate Polymer A2 and Chain Polymer B2, prepared in Preparation Examples 1 and 3, respectively, such that the solid content weight ratio thereof was 5:5.

Then, a porous film-coating slurry was prepared according to Preparation Example 5, and a separator was prepared according to Preparation Example 6 by coating the porous film with the prepared porous film-coating slurry, followed by drying.

Next, a cross-linking step was performed at a temperature of 80°C for 1 hour.

[Example 6]

A separator was manufactured in the same manner as in Example 5, except that when manufacturing the separator, the reaction time of the cross-linking step was adjusted to 3 hours.

[Example 7]

A separator was manufactured in the same manner as in Example 5, except that the solid content weight ratio of Particulate Polymer A2 to Chain Polymer B2 was adjusted to 6:4.

[Example 8]

A separator was manufactured in the same manner as in Example 6, except that the solid content weight ratio of Particulate Polymer A2 to Chain Polymer B2 was adjusted to 6:4.

[Comparative Example 1]

A separator was manufactured in the same manner as in Example 1, except that when manufacturing the separator, the cross-linking step was not involved.

[Comparative Example 2]

A separator was manufactured in the same manner as in Example 7, except that when manufacturing the separator, the cross-linking step was not involved.

The binder polymer compositions in Examples 1 to 8 and Comparative Examples 1 and 2, the solid content weight ratios of the particulate polymer to the chain polymer, and the conditions of the cross-linking step are shown in Table 1 below.

[Table 1]

| | Binder polymer composition | Solid content weight ratio of particulate polymer and chain polymer | Reaction time of cross-linking step (at 80°C) (hr) |
|---|---|---|---|
| Example 1 | $C_1$ | 4:6 | 1 |
| Example 2 | $C_1$ | 4:6 | 3 |
| Example 3 | $C_1$ | 5:5 | 1 |
| Example 4 | $C_1$ | 5:5 | 3 |

(continued)

| | Binder polymer composition | Solid content weight ratio of particulate polymer and chain polymer | Reaction time of cross-linking step (at 80°C) (hr) |
|---|---|---|---|
| Example 5 | $C_2$ | 5:5 | 1 |
| Example 6 | $C_2$ | 5:5 | 3 |
| Example 7 | $C_2$ | 6:4 | 1 |
| Example 8 | $C_2$ | 6:4 | 3 |
| Comparative Example 1 | $C_1$ | 4:6 | 0 |
| Comparative Example 2 | $C_2$ | 6:4 | 0 |

[Evaluation Example 1] Thermal shrinkage rate of separator

Samples of the separators of Examples 1 to 8 and Comparative Examples 1 and 2, with a width of 5 cm and a length of 5 cm, were prepared.

Each prepared sample was left unattended in an oven at a temperature of 150°C for 1 hour, and then the thermal shrinkage rate thereof was measured.

In other words, the thermal shrinkage rates of the separators of Examples 1 to 8 were calculated using the following expression: [(length in MD and TD after drying and cross-linking steps - separator length in MD and TD after being left unattended in oven at 150°C for 1 hour)/length in MD and TD after drying and cross-linking steps] * 100.

In the meantime, the thermal shrinkage rates of the separators of Comparative Examples 1 to 2 were calculated using the following expression: [(length in MD and TD after drying step - separator length in MD and TD after being left unattended in oven at 150°C for 1 hour)/length in MD and TD after drying step] * 100.

The calculation results thereof are shown in Table 2 below.

[Table 2]

| Binder polymer composition | Thermal shrinkage rate (%) at 150°C [MD/TD] |
|---|---|
| Example 1 | 4/4 |
| Example 2 | 2/2 |
| Example 3 | 5/5 |
| Example 4 | 4/4 |
| Example 5 | 5/5 |
| Example 6 | 3/3 |
| Example 7 | 4/5 |
| Example 8 | 2/3 |
| Comparative Example 1 | 8/8 |
| Comparative Example 2 | 7/8 |

In the case of the separators manufactured in Examples 1 to 8 and Comparative Examples 1 and 2 using the polymer compositions, it was confirmed that the thermal shrinkage rate of the separators that underwent the cross-linking step was reduced compared to the coated separators that did not undergo the cross-linking step.

After leaving each separator having undergone the cross-linking step unattended in the oven at a temperature of 150°C for 1 hour, the TD and MD thermal shrinkage rates of the separators manufactured in Examples 1 to 8 and Comparative Examples 1 and 2 using the polymer compositions were measured. Such measured TD and MD thermal shrinkage rates were 5% or lower.

In particular, when the cross-linking step was performed for 3 hours, the TD and MD thermal shrinkage rates could be 4% or lower and 3% or lower, respectively.

On the other hand, the TD and MD thermal shrinkage rates measured after leaving each separator of Comparative Examples 1 and 2, which did not undergo the cross-linking step, unattended in the oven at a temperature

of 150°C for 1 hour were in the range of 7% to 8%.

Through this, it is confirmed that the separators undergoing the cross-linking step have better heat resistance than the separators not undergoing the cross-linking step.

In addition, it was confirmed that the longer the reaction time of the cross-linking step from 1 hour to 3 hours, the better the heat resistance improvement effect.

In other words, it was seen that secondary battery performance could be improved by manufacturing a separator with excellent heat resistance using the polymer composition of the present application.

The scope of the present disclosure is defined by the appended claims rather than the detailed description presented above. All changes or modifications derived from the meaning and scope of the claims and the concept of equivalents should be construed to fall within the scope of the present disclosure.

## Industrial Applicability

A polymer composition of the present disclosure can improve the heat resistance of a separator. In addition, a battery with excellent characteristics can be implemented.

## Claims

1. A polymer composition comprising:

   a particulate polymer comprising a carboxyl group or an alcohol group; and
   a chain polymer comprising a carboxyl group or an alcohol group
   (wherein when the particulate polymer comprises a carboxyl group, the chain polymer comprises an alcohol group, and
   when the particulate polymer comprises an alcohol group, the chain polymer comprises a carboxyl group).

2. The polymer composition of claim 1, wherein the particulate polymer and the chain polymer comprise one or more monomer units selected from the group consisting of an acrylate-based monomer unit and an acrylic acid-based monomer unit.

3. The polymer composition of claim 2, wherein the particulate polymer further comprises a hydroxy acrylate-based monomer unit, and
   the chain polymer further comprises a vinyl alcohol-based monomer unit.

4. The polymer composition of claim 3, wherein the particulate polymer further comprises an acrylonitrile monomer unit, an acrylamide monomer unit, or a combination thereof.

5. The polymer composition of claim 1, wherein the particulate polymer comprises a monomer repeating unit represented by Formula 1 or 2 below,

   [Formula 1]

   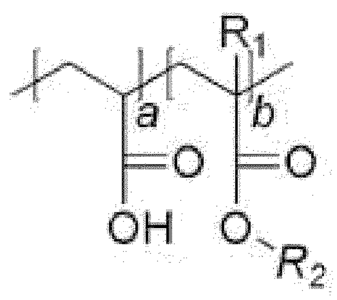

   where in Formula 1,

   $R_1$ is hydrogen, methyl, or a combination thereof,
   $R_2$ is hydrogen, a straight-chain or branched-chain hydrocarbon having 1 to 20 carbon atoms, or a combination

thereof,

$$0.05 \leq a \leq 0.3,\ 0.7 \leq b \leq 0.95, \text{ and } a + b = 1,$$

[Formula 2]

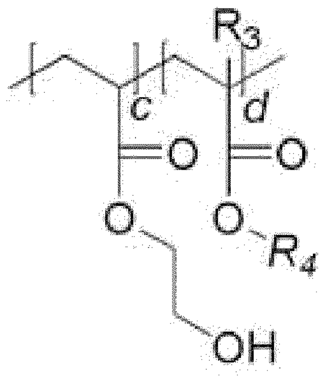

where in Formula 2,

$R_3$ is hydrogen, methyl, or a combination thereof,
$R_4$ is hydrogen, a straight-chain or branched-chain hydrocarbon having 1 to 20 carbon atoms, or a combination thereof,

$$0.05 \leq c \leq 0.3,\ 0.7 \leq d \leq 0.095, \text{ and } c + d = 1.$$

**6.** The polymer composition of claim 1, wherein the chain polymer comprises a monomer repeating unit represented by Formula 3 or 4 below,

[Formula 3]

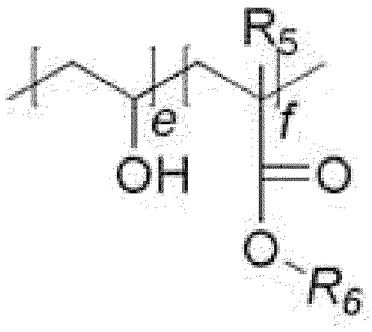

where in Formula 3,

$R_5$ is hydrogen, methyl, or a combination thereof,
$R_6$ is hydrogen, a straight-chain or branched-chain hydrocarbon having 1 to 20 carbon atoms, or a combination thereof,

$$0.6 \leq e \leq 1,\ 0 \leq f \leq 0.4, \text{ and } e + f = 1,$$

[Formula 4]

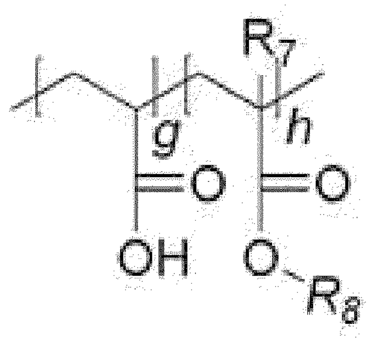

where in Formula 4,

$R_7$ is hydrogen, methyl, or a combination thereof,
$R_8$ is hydrogen, a straight-chain or branched-chain hydrocarbon having 1 to 20 carbon atoms, or a combination thereof,

$$0.7 \leq g \leq 1,\ 0 \leq h \leq 0.3, \text{ and } g + h = 1.$$

**7.** The polymer composition of claim 1, wherein a weight ratio of the particulate polymer to the chain polymer (particulate polymer weight:chain polymer weight) is in a range of 1:9 to 9:1.

**8.** The polymer composition of claim 1, wherein the particulate polymer and the chain polymer are linked to each other by an ester bond.

**9.** The polymer composition of claim 1, wherein the particulate polymer is synthesized by emulsion polymerization, and the chain polymer is synthesized by hydrolysis of a prepolymer synthesized by emulsion polymerization or is synthesized by solution polymerization.

**10.** A slurry composition comprising:

the polymer composition of any one of claims 1 to 9; and
inorganic particles.

**11.** A separator comprising:
the slurry composition of claim 10.

**12.** A secondary battery comprising:
the separator of claim 11.

**13.** A method of manufacturing a separator, the method comprising:

coating a porous substrate with a slurry composition comprising the polymer composition of any one of claims 1 to 9 and inorganic particles, followed by drying; and

cross-linking the resulting dried product at a temperature of 50°C or higher.

**INTERNATIONAL SEARCH REPORT**

International application No.
**PCT/KR2023/016715**

**A. CLASSIFICATION OF SUBJECT MATTER**

**H01M 50/42**(2021.01)i; **H01M 50/446**(2021.01)i; **H01M 50/403**(2021.01)i; **C08L 33/14**(2006.01)i; **C08L 33/02**(2006.01)i; **C08L 29/04**(2006.01)i; **C08L 33/20**(2006.01)i; **C08L 33/26**(2006.01)i; **C08L 101/06**(2006.01)i; **C08L 101/08**(2006.01)i

According to International Patent Classification (IPC) or to both national classification and IPC

**B. FIELDS SEARCHED**

Minimum documentation searched (classification system followed by classification symbols)

H01M 50/42(2021.01); H01L 31/04(2006.01); H01M 10/052(2010.01); H01M 2/14(2006.01); H01M 2/16(2006.01); H01M 50/403(2021.01); H01M 50/409(2021.01); H01M 50/414(2021.01); H01M 50/449(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 카르복실기(carboxyl), 중합체(polymer), 알콜(alcohol), 코팅(coating)

**C. DOCUMENTS CONSIDERED TO BE RELEVANT**

| Category* | Citation of document, with indication, where appropriate, of the relevant passages | Relevant to claim No. |
|---|---|---|
| X<br>Y | KR 10-2019-0062924 A (SK IE TECHNOLOGY CO., LTD. et al.) 07 June 2019 (2019-06-07)<br>See paragraphs [0014]-[0022] and [0126]-[0197] and claims 1 and 4. | 1-12<br>13 |
| Y | KR 10-2017-0087315 A (LG CHEM, LTD.) 28 July 2017 (2017-07-28)<br>See claims 1 and 17 and figure 1. | 13 |
| A | KR 10-2432637 B1 (HANSOL CHEMICAL CO., LTD.) 17 August 2022 (2022-08-17)<br>See paragraphs [0041] and [0142] and claims 1 and 7-8. | 1-13 |
| A | KR 10-0861117 B1 (INDUSTRY FOUNDATION OF CHONNAM NATIONAL UNIVERSITY) 30 September 2008 (2008-09-30)<br>See claim 1 and figure 1. | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 January 2024** | **01 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/016715**

**C. DOCUMENTS CONSIDERED TO BE RELEVANT**

| Category* | Citation of document, with indication, where appropriate, of the relevant passages | Relevant to claim No. |
|---|---|---|
| A | JP 2021-535545 A (LG CHEM, LTD.) 16 December 2021 (2021-12-16)<br>See paragraphs [0062]-[0087] and figure 1. | 1-13 |
| PX | KR 10-2558668 B1 (HANSOL CHEMICAL CO., LTD.) 27 July 2023 (2023-07-27)<br>See claims 1-7 and 9-13.<br>(This document is a published earlier application that serves as a basis for claiming priority of the present international application.) | 1-13 |

Form PCT/ISA/210 (second sheet) (July 2022)

**INTERNATIONAL SEARCH REPORT**
**Information on patent family members**

International application No.
**PCT/KR2023/016715**

| Patent document cited in search report | Publication date (day/month/year) | Patent family member(s) | Publication date (day/month/year) |
|---|---|---|---|
| KR 10-2019-0062924 A | 07 June 2019 | CN 109841784 A | 04 June 2019 |
| | | CN 109841784 B | 10 March 2023 |
| | | JP 2019-102453 A | 24 June 2019 |
| | | JP 7285634 B2 | 02 June 2023 |
| | | KR 10-2414896 B1 | 01 July 2022 |
| | | US 10756322 B2 | 25 August 2020 |
| | | US 2019-0165349 A1 | 30 May 2019 |
| KR 10-2017-0087315 A | 28 July 2017 | None | |
| KR 10-2432637 B1 | 17 August 2022 | WO 2023-177169 A1 | 21 September 2023 |
| KR 10-0861117 B1 | 30 September 2008 | None | |
| JP 2021-535545 A | 16 December 2021 | CN 112640196 A | 09 April 2021 |
| | | EP 3916836 A1 | 01 December 2021 |
| | | JP 7098050 B2 | 08 July 2022 |
| | | KR 10-2020-0130134 A | 18 November 2020 |
| | | KR 10-2477643 B1 | 13 December 2022 |
| | | US 2022-0006156 A1 | 06 January 2022 |
| KR 10-2558668 B1 | 27 July 2023 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 101430975
- KR 1020060072065